# EUROPEAN PATENT SPECIFICATION

(11) **EP 4 137 467 B1**
(45) Date of publication and mention of the grant of the patent: **27.11.2024**
(21) Application number: 20931232.1
(22) Date of filing: 17.09.2020
(51) Int. Cl.: C03B 37/018

(54) **SYSTEM AND METHOD FOR IMPROVING UNIFORMITY OF PCVD RAW MATERIAL VAPOR DEPOSITION, AND USE THEREOF**
SYSTEM UND VERFAHREN ZUR VERBESSERUNG DER GLEICHFÖRMIGKEIT VON PCVD-ROHMATERIALDAMPFABSCHEIDUNG UND VERWENDUNG DAVON
SYSTÈME ET PROCÉDÉ D'AMÉLIORATION DE L'UNIFORMITÉ DE DÉPÔT DE VAPEUR DE MATIÈRE PREMIÈRE PCVD, ET LEUR UTILISATION

(30) Priority: 13.04.2020 CN 202010286507
(43) Date of publication of application: 22.02.2023
(73) Proprietor: Fiberhome Telecommunication Technologies Co., Ltd, Wuhan, Hubei 430000 (CN); Fiberhome Fujikura Optic Technology Co., Ltd, Wuhan, Hubei 430000 (CN)
(72) Inventor: YUE, Jing, Wuhan, Hubei 430000 (CN); YU, Huang, Wuhan, Hubei 430000 (CN); LUO, Cheng, Wuhan, Hubei 430000 (CN); PENG, Chuyu, Wuhan, Hubei 430000 (CN); CAI, Bingfeng, Wuhan, Hubei 430000 (CN)
(74) Representative: Kuhnen & Wacker Patent- und Rechtsanwaltsbüro PartG mbB
(86) International application number: PCT/CN2020/115851
(87) International publication number: WO 2021/208350

(56) References cited:
- EP-A1- 1 622 841
- EP-B1- 1 622 841
- CN-A- 1 433 982
- CN-A- 103 043 894
- CN-A- 108 046 583
- CN-A- 108 046 583
- CN-A- 111 517 634
- CN-A- 87 105 870
- US-A- 4 857 091
- US-A- 4 944 244
- US-A1- 2011 247 369

## Description

### Field of the Invention

The present invention belongs to the technical field of optical fiber preform production, in particular to a system and a method for improving the uniformity of PCVD raw material vapor (gas) deposition, and use thereof, in particular to a system for improving the uniformity of PCVD raw material vapor (gas) deposition, a method for improving the uniformity of PCVD raw material vapor (gas) deposition, and a use of the system or method in a preparation of a core rod of an optical fiber preform.

### Background of the Invention

Plasma Chemical Vapor Deposition (PCVD) is a plasma chemical vapor deposition method. The preparation of an optical fiber preform by PCVD process is to use microwave as a heat source and simultaneously use a holding furnace to heat a reaction liner tube and provide a constant temperature field. The reaction raw materials are SiCl₄ and O₂, and GeCl₄ and C2F₆ are simultaneously used as dopants to participate in the reaction to adjust the refractive index of the preform. At the beginning of the reaction, the microwave activates the raw material gas to produce plasma, which recombines to release a large amount of heat and forms a thin layer of glass deposited on the inner surface of the liner tube. Repeated this many times, the thin layers of glass are stacked to form a hollow liner tube with a thickness of 5mm to 10mm. The liner tube is then fused and corroded by an electric furnace to finally form a solid preform. The length of the preform is generally 1000mm to 1300mm.

In the existing PCVD deposition process, the raw materials such as SiCl₄ and GeCl₄ are kept in a constant temperature and constant pressure state in a material cabinet. After the deposition starts, the vaporized raw material enters the liner tube through a gas-guide tube, and the microwave moves along the axial direction of the liner tube to vitrify the raw material, and the reacted tailings are pumped out from the other end of the liner tube by a vacuum pump. Generally, the preform obtained by the PCVD deposition has the problem of axial nonuniformity. The non-uniformity deposition position is generally concentrated at 0mm to 100mm at the gas end and 0mm to 200mm at the pump end of the preform. A common factor is the influence of holding furnace temperature setting in the PCVD deposition. The temperature setting value at the gas end of the holding furnace is generally higher than the intermediate temperature of the holding furnace. This is because the temperature of gas raw material when entering the glass liner tube is generally lower than 110 °C, and cold spots are easy to form in front of the microwave reaction zone of the liner tube. The cold spots are formed when the raw materials that are not fully vitrified adhere to the inner wall of the liner tube, which has a large stress effect and affects the quality of the preform. The temperature at the gas end is increased, and the gas raw material is fully preheated in the liner tube before entering the microwave action area, which can effectively reduce the formation of the cold spots. However, the increase of the temperature at the gas end will affect the deposition efficiency of Ge in this area. The Ge accelerates volatilization at high temperature and moves with the direction of air flow in the liner tube, and performs secondary deposition in the middle of the liner tube or turns into tailings and is pumped away by the vacuum pump. The optical refractive index of the preform is non-uniformity, and the refractive index of the gas end is smaller than the middle refractive index, and the optical fiber drawn from the gas end preform is more prone to the problem of unqualified optical fiber parameters. The temperature of the pump end of the holding furnace is generally higher, because in the process of the gas raw material in the liner tube flowing to the pump end, part of the heat is carried to the pump end. At the same time, the temperature at the pump end is artificially increased, so that the formation of cracks in the sedimentary layer or blockage of sedimentary pellets at the end of the liner tube by the reaction tailings can be avoided. However, the high temperature at the pump end also reduces the deposition efficiency of the Ge, which reduces the refractive index of the preform in this area.

At present, in view of the non-uniformity problem caused by low Ge doping efficiency caused by the high PCVD deposition temperature, the usual solution is to control the temperature to make the temperature field of the overall holding furnace tend to be uniform. Patent CN108046583A discloses that both ends of the glass liner tube are welded with a gas end extension pipe and a pump end extension pipe, and a heating device for preheating pipe section is added on the gas end extension pipe, and the reaction gas passing through the preheating pipe section is preheated by the heating device to avoid the occurrence of the cracks in the sedimentary layer of the intake section. This method does not sufficiently preheat the gas raw material, and the extension pipe increases the cost of the optical fiber. US Patent US2009/0022906 discloses that the holding furnace is moved along the axial direction of the liner tube. This method can improve the uniformity of the preform, but it will affect the effective rod length of the preform and increase the cost of the optical fiber. In addition, the equipment of this method is complicated.

Therefore, the existing problem is that there is an urgent need to research and develop a system and a method for improving the uniformity of PCVD raw material gas deposition, and use thereof.

### Summary of the Invention

In view of the defects existing in the prior art, the purpose of the present invention is to provide a system and a method for improving the uniformity of PCVD raw material gas deposition, and use thereof. Through setting a PLC control unit connected with the microwave generator and the holding furnace, and adopting a control method in which the output power of the microwave generator is linked in real-time with the temperature of the holding furnace, the present invention realizes the adjustability of the output power of the microwave generator along the axial direction of the liner tube, so as to compensate for the uneven deposition of gas raw materials in the liner tube caused by the uneven distribution of the temperature field in the deposition section of the liner tube, and ensure the overall deposition uniformity of the deposition section of the liner tube. At the same time, the present invention can precisely control the vitrification conditions of the gas raw materials entering the deposition section of the liner tube, with a high degree of automation, and the invention is simple to operate and easy to implement. In addition, the effective rod length of the core rod of the optical fiber preform prepared by the present invention is increased, and the cost of rod manufacturing is reduced.

In order to achieve the above purpose, a first aspect of the present invention provides a system for improving the uniformity of PCVD raw material gas deposition, comprising:
a liner tube;
a microwave generator, which is sleeved on an outside of the liner tube, and is configured to reciprocate along an axial direction of the liner tube;
a holding furnace, which is sleeved on the outside of the microwave generator, and a temperature-measuring probe is arranged therein and is configured to measure a set temperature at each real-time position in the holding furnace during an axial movement of the microwave generator along the liner tube;
wherein the holding furnace is successively provided with a gas end area, a middle end area and a pump end area along the axial direction of the liner tube;
a preset output power of the microwave generator in each area is the same;
the system further comprises a PLC control unit, which is connected to the holding furnace and the microwave generator, and is configured to:
   during the movement of the microwave generator along the axial direction of the liner tube from the gas end area to the pump end area, according to the set temperature at the real-time position fed back by the temperature-measuring probe, determine an ending position of the gas end area or a starting position of the middle end area, and the ending position of the middle end area or the starting position of the pump end area, reduce an actual output power of the microwave generator at the starting position of the gas end area and the starting position of the pump end area, and keep the reduced actual output power constant in the gas end area and the pump end area.

On the basis of the above technical solution, the set temperature at the real-time position during the movement of the microwave generator along the axial direction of the liner tube from the gas end area to the pump end area presents a trend of first increasing, then decreasing and then increasing.

On the basis of the above technical solution, the set temperature at the real-time position of the gas end area is not less than the temperature corresponding to the preset output power;
during the movement of the microwave generator along the axial direction of the liner tube from the gas end area to the pump end area: when the set temperature at the real-time position fed back by the temperature-measuring probe gradually decreases and falls to the temperature corresponding to the preset output power, the real-time position is the ending position of the gas end area or the starting position of the middle end area; and when the difference between the set temperature at the real-time position fed back by the temperature-measuring probe and the temperature at the previous real-time position shows a reverse mutation, the real-time position is the ending position of the middle end area or the starting position of the pump end area.

On the basis of the above technical solution, the set temperature T_{gas} at the real-time position of the gas end area is 1000 °C≤T_{gas}≤1080°C; the set temperature T_{middle} at the real-time position of the middle end area is 950°C≤T_{middle}<1000°C; and the set temperature Tₚᵤₘₚ at the real-time position of the pump end area is 950°C<Tₚᵤₘₚ≤ 1030°C.

On the basis of the above technical solution, the preset output power is 7.0kw; and the temperature corresponding to the preset output power is 994°C to 1030°C.

According to the invention, the actual output power of the microwave generator is reduced at the starting position of the gas end area and the starting position of the pump end area.

On the basis of the above technical solution, the actual output power of the microwave generator is reduced to any value greater than 5.0kw and less than 7.0kw at the starting position of the gas end area and the starting position of the pump end area.

On the basis of the above technical solution, the actual output power of the microwave generator at the starting position of the gas end area is reduced to 5.5kw, and the actual output power of the microwave generator at the starting position of the pump end area is reduced to 5.5kw.

On the basis of the above technical solution, the actual output power of the microwave generator at the starting position of the gas end area is reduced to 6.0kw, and the actual output power of the microwave generator at the starting position of the pump end area is reduced to 5.5kw.

On the basis of the above technical solution, the lengths of the gas end area and the pump end area are both smaller than that of the middle end area.

On the basis of the above technical solution, the lengths of the gas end area and the pump end area are both 200mm to 400mm; and the length of the middle end area is 600mm to 900mm.

On the basis of the above technical solution, during the movement of the microwave generator along the axial direction of the liner tube from the pump end area to the gas end area, the actual output power of each area is maintained respectively to be the same as that of the corresponding area during the movement of the microwave generator along the axial direction of the liner tube from the gas end area to the pump end area.

A second aspect of the present invention provides a method for improving the uniformity of PCVD raw material gas deposition, which adopts the system for improving the uniformity of PCVD raw material gas deposition according to the first aspect of the present invention to perform the deposition on the PCVD raw material gas, and the method comprises the following steps:
setting a set temperature and a preset output power at each real-time position in the holding furnace;
making raw material gas enter the liner tube from a gas end area and move from the gas end area to the pump end area along the axial direction of the liner tube;
measuring the set temperature at the real-time position at the liner tube where a microwave generator is located; and
determining the ending position of the gas end area or the starting position of the middle end area, and the ending position of the middle end area or the starting position of the pump end area according to the set temperature at the real-time position, and reducing the actual output power of the microwave generator at the starting position of the gas end area and the starting position of the pump end area, and keeping the reduced actual output power constant in the gas end area and the pump end area.

A third aspect of the present invention provides a use of the system for improving the uniformity of PCVD raw material gas deposition according to the first aspect of the present invention or of the method for improving the uniformity of PCVD raw material gas deposition according to the second aspect of the present invention in a preparation of a core rod of an optical fiber preform.

Compared with the prior art, the present invention has the following advantages:
Through setting a PLC control unit connected with the microwave generator and the holding furnace, and adopting a control method in which the output power of the microwave generator is linked in real-time with the temperature of the holding furnace, the present invention realizes the controllability of the output power of the microwave generator along the axial direction of the liner tube, so as to compensate for the uneven deposition of gas raw materials (especially GE) in the liner tube caused by the uneven distribution of the temperature field in the deposition section of the liner tube, and ensure the overall deposition uniformity of the deposition section of the liner tube. At the same time, the present invention can precisely control the vitrification conditions of the gas raw materials entering the deposition section of the liner tube, with a high degree of automation, and the invention is simple to operate and easy to implement. In addition, the effective rod length of the core rod of the optical fiber preform prepared by the present invention is increased, and the cost of rod manufacturing is reduced.

### Brief Description of the Drawings

Fig. 1 is a schematic diagram of an existing conventional PCVD deposition system.
Fig. 2 is a temperature distribution diagram of a holding furnace in some embodiments of the present invention.
Fig. 3 is a distribution diagram of an actual output power of a microwave generator in each area of a holding furnace under different embodiments of the present invention.
Fig. 4 is a schematic diagram of a PCVD deposition system in some embodiments of the present invention.
Fig. 5 is a full measurement diagram of a relative refractive index of a core layer of a core rod of an optical fiber preform prepared under different embodiments of the present invention.
Fig. 6 is a full measurement diagram of a core diameter of a core rod of an optical fiber preform prepared under different embodiments of the present invention.

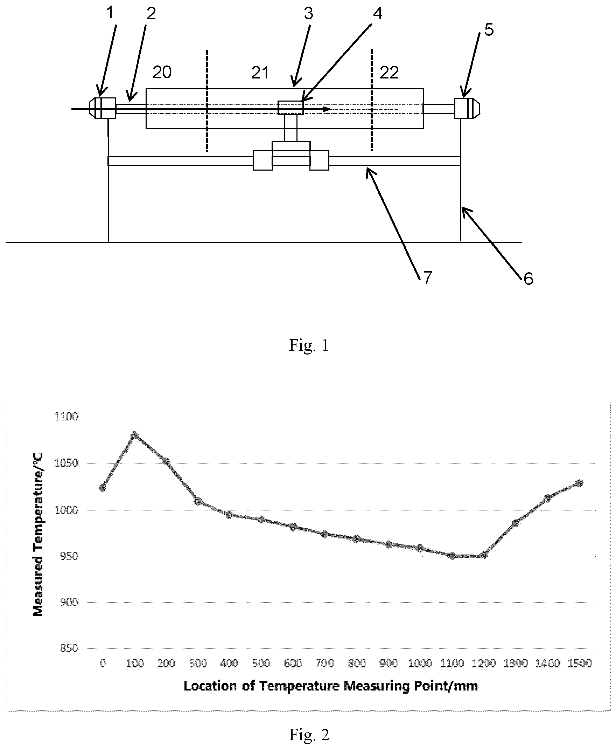

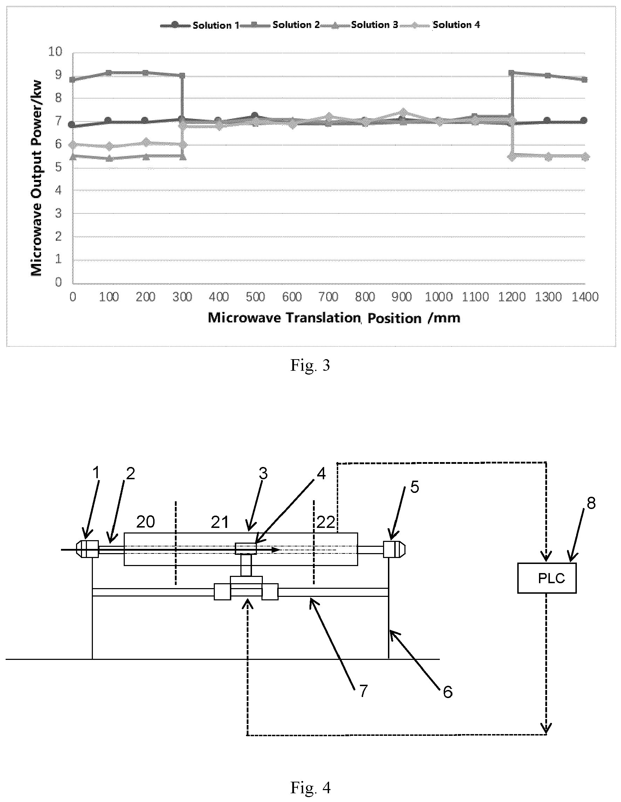

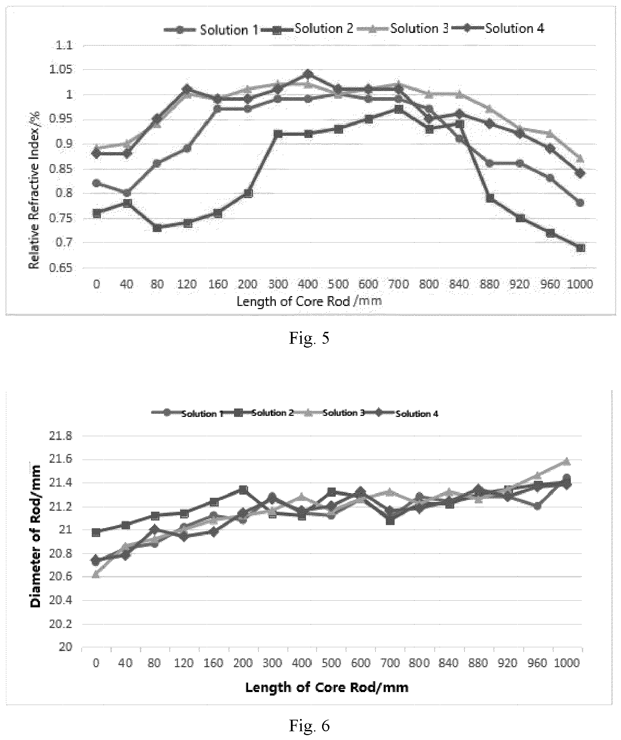

(Note: the abscissa in Fig. 2 and Fig. 3 is the length of the holding furnace, that is, the ideal length of the rod; the abscissa in Fig. 5 and Fig. 6 is the actual length of the core rod, which is 1000mm. Due to the influence of the deposition process, the actual length of the core rod is obtained through shrinking both ends inward on the basis of the ideal length of the rod. Therefore, the abscissas of 0mm to 1000mm in Fig. 4 and Fig. 5 are no longer in one-to-one correspondence with the abscissas in Fig. 2 and Fig. 3)

In the figure, the meanings of the reference numerals are as follows:
1-gas end interface; 2-liner tube; 3-holding furnace; 4-microwave generator; 5-pump end interface; 6-deposition lathe bracket; 7-translation platform; 8-PLC control unit; 20-gas end area; 21-middle end area; 22-pump end area.

### Detailed Description of the Embodiments

For easier understanding, the present invention will be further described below in detail with reference to the drawings in combination with the embodiments. It should be understood that these embodiments are illustrative only and are not intended to limit the present invention.

In the existing PCVD deposition method, in order to avoid the generation of cracks and particles in the deposition area of the liner tube, a higher deposition temperature is usually used in the gas end area and the pump end area. Therefore, it is easy to cause the non-uniformity of axial doping of the gas raw materials (especially Ge), thereby reducing the effective length of the prepared core rod of the optical fiber preform and increasing the cost of rod manufacturing. In order to solve the above problems, the inventor found through a large number of experimental studies that through adopting a control method in which the output power of the microwave generator is linked in real-time with the temperature of the holding furnace, that is, the adjustability of the output power of the microwave generator along the axial direction of the liner tube, the non-uniformity deposition of gas raw materials (especially GE) in the liner tube caused by the uneven distribution of the temperature field in the deposition section of the liner tube can be compensated, and the effective rod length of the prepared core rod of the optical fiber preform is increased at the same time, which effectively reduces the cost of rod manufacturing. The present invention has been made based on the above findings.

### Comparative Example 1

As shown in Fig. 1, Fig. 1 shows a schematic diagram of an existing conventional PCVD deposition system. The system comprises:
a deposition lathe bracket 6;
a liner tube 2, which is erected on both ends of the deposition lathe bracket 6 and fixed by means of a gas end interface 1 and a pump end interface 5 respectively;
a microwave generator 4, which is sleeved on an outside of the liner tube 2;
a holding furnace 3, which is sleeved on the outside of the microwave generator 4, and a temperature-measuring probe is arranged therein and is configured to measure a set temperature at each real-time position in the holding furnace 3 during an axial movement of the microwave generator 4 along the liner tube 2; the holding furnace 3 is successively provided with a gas end area 20, a middle end area 21 and a pump end area 22 along the axial direction of the liner tube 2; and
a translation platform 7, which is arranged directly below the microwave generator 4;
wherein the translation platform 7 is configured to drive the microwave generator 4 to reciprocate along the axial direction of the liner tube 2 when the translation platform 7 reciprocates in the axial direction parallel to the liner tube 2.

In order to avoid cracks and particles in the deposition area of the liner tube, the method for PCVD deposition using this system comprises the following steps:
S1: setting a temperature and a preset output power at each real-time position in the holding furnace 3; and
S2: making raw material gas enter the liner tube 2 from the gas end area 20 and reciprocate along the axial direction of the liner tube 2 under a constant preset output power.

In S1, in order to avoid the cracks and particles in the deposition area of the liner tube, it is usually necessary to set a gas end area and a pump end area to maintain a relatively high temperature. Moreover, the setting principle of each real-time position in the holding furnace 3 is as follows: the set temperature at the real-time position during the movement of the microwave generator 4 from the gas end area 20 to the pump end area 22 along the axial direction of the liner tube 2 is arbitrarily set in a trend of first increasing, then decreasing and then increasing. For example, the temperature distribution curve of the holding furnace can be set as shown in Fig. 2 (the measured temperature on the ordinate is also the set temperature), and the specific temperature every 100mm along the axial direction of the liner tube from the starting position of the gas end is shown in Table 1.

**Table 1 Temperature Distribution of Holding Furnace**

| Distance From Starting Position of Gas End Area/mm | Temperature/°C |
|---|---|
| 0 | 1023 |
| 100 | 1080 |
| 200 | 1052 |
| 300 | 1009 |
| 400 | 994 |
| 500 | 989 |
| 600 | 981 |
| 700 | 973 |
| 800 | 968 |
| 900 | 962 |
| 1000 | 958 |
| 1100 | 950 |
| 1200 | 951 |
| 1300 | 985 |
| 1400 | 1012 |
| 1500 | 1028 |

The preset output power is 7.0kw, and the temperature corresponding to the preset output power is 1009 °C.

The set temperature at the real-time position of the gas end area 20 is not less than the temperature corresponding to the preset output power, and during the movement of the microwave generator 4 along the axial direction of the liner tube 2 from the gas end area 20 to the pump end area 22: when the set temperature at the real-time position fed back by the temperature-measuring probe gradually decreases and falls to the temperature corresponding to the preset output power, the real-time position is the ending position of the gas end area 20 or the starting position of the middle end area 21; and when the difference between the set temperature at the real-time position fed back by the temperature-measuring probe and the temperature at the previous real-time position shows a reverse mutation, the real-time position is the ending position of the middle end area 21 or the starting position of the pump end area 22.

Therefore, under the temperature distribution curve shown in Fig. 2, the position of 300mm is the ending position of the gas end area 20 or the starting position of the middle end area 21; and the position of 1200mm is the ending position of the middle end area 21 or the starting position of the pump end area 22. That is, the length of the gas end area 20 is 300mm, the starting position of the gas end area is taken as the original point, so that the area where the gas end area 20 is located is the area with the length of the liner tube of 0mm to 300mm. The length of the middle end area 21 is 900mm, the starting position of the gas end area is taken as the original point, so that the area where the middle end area 21 is located is the area with the length of the liner tube of 300mm to 1200mm. The length of the pump end area 22 is 200mm, the starting position of the gas end area is taken as the original point, so that the area where the pump end area 22 is located is the area where the length of the liner tube is 1200mm to 1400mm.

When the system and method are applied to the preparation of the core rod of the optical fiber preform, the relative refractive index and core diameter test results of the obtained core rod are shown in solution 1 of Fig. 5 and Fig. 6, respectively. When the output power of the microwave generator 4 is constant along the axial direction of the liner tube 2, as shown in Fig. 2, due to the large fluctuations in the temperature of the gas end area 20 and the temperature of the pump end area 22, that is, the set temperature T_{gas} at the real-time position of the gas end area 20 is 1000 °C≤T_{gas}≤1080 °C, the set temperature T_{middle} at the real-time position of the middle end area 21 is 950°C≤T_{middle}<1000°C, and the set temperature Tₚᵤₘₚ at the real-time position of the pump end area 22 is 950°C<Tₚᵤₘₚ≤1030°C. As shown in Fig. 5, the deposition efficiency of Ge in the raw material gas at both ends of the core rod is low. Since the qualified range of the refractive index of the entire core rod is 0.92% to 1.08%, the unqualified parts at both ends of the core rod are in the area with the length of the core rod of 0mm to 136mm and 836mm to 1000mm, and the effective length of the core rod finally obtained is 700mm.

### Comparative Example 2

As shown in Fig. 4, Fig. 4 shows a schematic diagram of a PCVD deposition system in the present invention. The system comprises:
a deposition lathe bracket 6;
a liner tube 2, which is erected on both ends of the deposition lathe bracket 6 and fixed by means of a gas end interface 1 and a pump end interface 5 respectively;
a microwave generator 4, which is sleeved on an outside of the liner tube 2, and is configured to reciprocate along an axial direction of the liner tube 2;
a translation platform 7, which is located directly below the microwave generator 4, and is configured to drive the microwave generator 4 to reciprocate along the axial direction of the liner tube 2 when the translation platform 7 reciprocates in the axial direction parallel to the liner tube 2;
a holding furnace 3, which is sleeved on the outside of the microwave generator 4, and a temperature-measuring probe is arranged therein and is configured to measure a set temperature at each real-time position in the holding furnace 3 during an axial movement of the microwave generator 4 along the liner tube 2;
wherein the holding furnace 3 is successively provided with a gas end area 20, a middle end area 21 and a pump end area 22 along the axial direction of the liner tube 2; and
the preset output power of the microwave generator 4 in each area is the same.

The system further comprises a PLC control unit 8, which is connected to the holding furnace 3 and the microwave generator 4, and is configured to: during the movement of the microwave generator 4 along the axial direction of the liner tube 2 from the gas end area 20 to the pump end area 22, according to the set temperature at the real-time position fed back by the temperature-measuring probe, determine an ending position of the gas end area 20 or a starting position of the middle end area 21, the ending position of the middle end area 21 or the starting position of the pump end area 22, change an actual output power of the microwave generator 4 at the starting position of the gas end area 20 and the starting position of the pump end area 22, and keep the changed actual output power constant in the gas end area 20 and the pump end area 22.

In order to improve the uniformity of the PCVD raw material gas deposition, the method for PCVD deposition using this system comprises the following steps:
S1: setting a temperature and a preset output power at each real-time position in the holding furnace 3;
S2: making raw material gas enter a liner tube 2 from a gas end area 20 and move from the gas end area 20 to a pump end area 22 along the axial direction of the liner tube 2;
S3: measuring the set temperature at the real-time position at the liner tube 2 where the microwave generator 4 is located;
S4: determining the ending position of the gas end area 20 or the starting position of the middle end area 21, and the ending position of the middle end area 21 or the starting position of the pump end area 22 according to the set temperature at the real-time position, and changing the actual output power of the microwave generator 4 at the starting position of the gas end area 20 and the starting position of the pump end area 22, and keeping the changed actual output power constant in the gas end area 20 and the pump end area 22; and
S5: maintaining the actual output power of each area respectively to be the same as that of the corresponding area during the movement of the microwave generator 4 along the axial direction of the liner tube 2 from the gas end area 20 to the pump end area 22 during the movement of the microwave generator 4 along the axial direction of the liner tube 2 from the pump end area 22 to the gas end area 20.

In S1, the set temperature of each real-time position in the holding furnace 3, which is the same as that of the comparative example 1, is set, and the temperature distribution curve thereof is shown in Fig. 2. The preset output power is 7.0kw, and the temperature corresponding to the preset output power is 1009 °C.

The set temperature at the real-time position of the gas end area 20 is not less than the temperature corresponding to the preset output power, and during the movement of the microwave generator 4 along the axial direction of the liner tube 2 from the gas end area 20 to the pump end area 22: when the set temperature at the real-time position fed back by the temperature-measuring probe gradually decreases and falls to the temperature corresponding to the preset output power, the real-time position is the ending position of the gas end area 20 or the starting position of the middle end area 21; and when the difference between the set temperature at the real-time position fed back by the temperature-measuring probe and the temperature at the previous real-time position shows a reverse mutation, the real-time position is the ending position of the middle end area 21 or the starting position of the pump end area 22.

Therefore, under the temperature distribution curve shown in Fig. 2, the position of 300mm is the ending position of the gas end area 20 or the starting position of the middle end area 21; and the position of 1200mm is the ending position of the middle end area 21 or the starting position of the pump end area 22. That is, the length of the gas end area 20 is 300mm, the starting position of the gas end area is taken as the original point, so that the area where the gas end area 20 is located is the area with the length of the liner tube of 0mm to 300mm. The length of the middle end area 21 is 900mm, the starting position of the gas end area is taken as the original point, so that the area where the middle end area 21 is located is the area with the length of the liner tube of 300mm to 1200mm. The length of the pump end area 22 is the length of the remaining liner tube 2, i.e., 200mm, the starting position of the gas end area is taken as the original point, so that the area where the pump end area 22 is located is the area where the length of the liner tube is 12000mm to 1400mm.

In order to adjust the relative refractive index of the core rod at both ends of the holding furnace 3, when the temperature of the holding furnace 3 is constant, this comparative example compensates for the influence of temperature on the deposition efficiency of Ge through adjusting the axial output power of the microwave. Therefore, in S4 of this comparative example, the actual output power of the microwave generator 4 in the gas end area 20 is set to 9.0kw, and the actual output power of the microwave generator 4 in the pump end area 22 is set to 9.0kw. At the same time, the actual output power of the microwave generator 4 in the middle end area 21 is maintained to be the preset output power of 7.0kw.

When the system and method are applied to the preparation of the core rod of the optical fiber preform, the relative refractive index and core diameter test results of the obtained core rod are shown in solution 2 of Fig. 5 and Fig. 6, respectively. As shown in Fig. 5, compared with the solution 1 of the comparative example 1, in the solution 2 provided by this comparative example, the deposition efficiency of Ge in the raw material gas at both ends of the core rod is lower. Since the qualified range of the refractive index of the entire core rod is 0.92% to 1.08%, the unqualified parts at both ends of the core rod are in the area with the length of the core rod of 0mm to 300mm and 860mm to 1000mm, and the effective length of the core rod finally obtained is 560mm. In addition, as shown in Fig. 6, since the actual output power of the microwave at both ends of the holding furnace 3 is improved, compared with the core diameter data in the solution 1 of the comparative example 1, the core diameter of the comparative example 2 in the gas end area of 0 to 200mm is improved compared with that of the solution 1.

### Embodiment 1

The PCVD deposition system and method provided in this embodiment are the same as those in Comparative Example 2, except that in S4, the actual output power of the microwave generator 4 in the gas end area 20 is set to 5.5kw, and the actual output power of the microwave generator 4 in the pump end area 22 is set to 5.0kw. At the same time, the actual output power of the microwave generator 4 in the middle end area 21 is maintained to be the preset output power of 7.0kw.

During the deposition of the raw material gas, in this embodiment, atomization phenomenon is observed on the inner surface of the gas end area 20 of the liner tube 2, which is caused by insufficient actual output power of the microwave.

When the system and method are applied to the preparation of the core rod of the optical fiber preform, the relative refractive index and core diameter test results of the obtained core rod are shown in solution 3 of Fig. 5 and Fig. 6, respectively. As shown in Fig. 5, compared with the solution 1 of the comparative example 1, in the solution 3 provided by this embodiment, the deposition efficiency of Ge in the raw material gas at both ends of the core rod is significantly improved, and the unqualified parts at both ends of the core rod are in the area with the length of the core rod are 0mm to 60mm and 960 to 1000mm, and the effective length of the core rod is 900mm, which is significantly improved. In addition, as shown in Fig. 6, the core diameter in the solution 3 of the present embodiment has no obvious change compared with that in the solution 1 of the comparative example 1.

### Embodiment 2

The PCVD deposition system and method provided in this embodiment are the same as those in the comparative example 2, except that in S4, the actual output power of the microwave generator 4 in the gas end area 20 is set to 6.0kw, and the actual output power of the microwave generator 4 in the pump end area 22 is set to 5.0kw. At the same time, the actual output power of the microwave generator 4 in the middle end area 21 is maintained to be the preset output power of 7.0kw.

During the deposition of the raw material gas, in this embodiment, normal deposition is observed on the inner surface of the gas end area 20 of the liner tube 2 in this embodiment.

When the system and method are applied to the preparation of the core rod of the optical fiber preform, the relative refractive index and core diameter test results of the obtained core rod are shown in solution 4 of Fig. 5 and Fig. 6, respectively. As shown in Fig. 5, compared with the solution 1 of the comparative example 1, in the solution 4 provided by this embodiment, the deposition efficiency of Ge in the raw material gas at both ends of the core rod is significantly improved, and the unqualified parts at both ends of the core rod are in the area with the length of the core rod od 0mm-60mm and 920-1000mm, and the effective length of the core rod is 860mm, which is significantly improved. In addition, as shown in Fig. 6, the core diameter in the solution 4 of the present embodiment has no obvious change compared with that in the solution 1 of the comparative example 1.

It can be seen from the above embodiments and comparative examples that the axial adjustability of the actual output power of the microwave generator can be realized through using the system and method provided by the present invention, and the overall deposition uniformity of the deposition section of the liner tube can be improved through reducing the actual output power of the microwave generator in the gas end area and the pump end area, so as to improve the effective length of the core rod and reduce the cost of rod manufacturing.

## Claims

1. A system for improving the uniformity of Plasma Chemical Vapor Deposition (PCVD) raw material gas deposition, comprising:
a liner tube (2);
a microwave generator (4), which is sleeved on an outside of the liner tube (2), and is configured to reciprocate along an axial direction of the liner tube (2);
a holding furnace (3), which is sleeved on the outside of the microwave generator (4), and a temperature-measuring probe is arranged therein and is configured to measure a set temperature at each real-time position in the holding furnace (3) during an axial movement of the microwave generator (4) along the liner tube (2);
wherein the holding furnace (3) is successively provided with a gas end area (20), a middle end area (21) and a pump end area (22) along the axial direction of the liner tube (2);
a preset output power of the microwave generator (4) in each area is the same;
the system further comprises a PLC control unit (8), which is connected to the holding furnace (3) and the microwave generator (4), and is configured to:
during the movement of the microwave generator (4) along the axial direction of the liner tube (2) from the gas end area (20) to the pump end area (22), according to the set temperature at the real-time position fed back by the temperature-measuring probe, determine an ending position of the gas end area (20) or a starting position of the middle end area (21), and the ending position of the middle end area (21) or the starting position of the pump end area (22), reduce an actual output power of the microwave generator (4) at the starting position of the gas end area (20) and the starting position of the pump end area (22), and keep the reduced actual output power constant in the gas end area (20) and the pump end area (22).

2. The system for improving the uniformity of PCVD raw material gas deposition according to claim 1, wherein the set temperature at the real-time position during the movement of the microwave generator (4) along the axial direction of the liner tube (2) from the gas end area (20) to the pump end area (22) presents a trend of first increasing, then decreasing and then increasing.

3. The system for improving the uniformity of PCVD raw material gas deposition according to claim 2, wherein the set temperature at the real-time position of the gas end area (20) is not less than the temperature corresponding to the preset output power;
during the movement of the microwave generator (4) along the axial direction of the liner tube (2) from the gas end area (20) to the pump end area (22): when the set temperature at the real-time position fed back by the temperature-measuring probe gradually decreases and falls to the temperature corresponding to the preset output power, the real-time position is the ending position of the gas end area (20) or the starting position of the middle end area (21); and when the difference between the set temperature at the real-time position fed back by the temperature-measuring probe and the temperature at the previous real-time position shows a reverse mutation, the real-time position is the ending position of the middle end area (21) or the starting position of the pump end area (22).

4. The system for improving the uniformity of PCVD raw material gas deposition according to claim 3, wherein the set temperature T_{gas} at the real-time position of the gas end area (20) is 1000°C≤T_{gas}≤1080°C; the set temperature T_{middle} at the real-time position of the middle end area (21) is 950°C≤T_{middle}<1000°C; and the set temperature Tₚᵤₘₚ at the real-time position of the pump end area (22) is 950°C<Tₚᵤₘₚ≤1030°C.

5. The system for improving the uniformity of PCVD raw material gas deposition according to claim 3, wherein the preset output power is 7.0kw; and the temperature corresponding to the preset output power is 994°C to 1030°C.

6. The system for improving the uniformity of PCVD raw material gas deposition according to claim 1, wherein the actual output power of the microwave generator (4) is reduced to any value greater than 5.0kw and less than 7.0kw at the starting position of the gas end area (20) and the starting position of the pump end area (22).

7. The system for improving the uniformity of PCVD raw material gas deposition according to claim 6, wherein the actual output power of the microwave generator (4) at the starting position of the gas end area (20) is reduced to 5.5kw, and the actual output power of the microwave generator (4) at the starting position of the pump end area (22) is reduced to 5.5kw.

8. The system for improving the uniformity of PCVD raw material gas deposition according to claim 6, wherein the actual output power of the microwave generator (4) at the starting position of the gas end area (20) is reduced to 6.0kw, and the actual output power of the microwave generator (4) at the starting position of the pump end area (22) is reduced to 5.5kw.

9. The system for improving the uniformity of PCVD raw material gas deposition according to claim 1, wherein the lengths of the gas end area (20) and the pump end area (22) are both smaller than that of the middle end area (21).

10. The system for improving the uniformity of PCVD raw material gas deposition according to claim 9, wherein the lengths of the gas end area (20) and the pump end area (22) are both 200mm to 400mm; and the length of the middle end area (21) is 600mm to 900mm.

11. The system for improving the uniformity of PCVD raw material gas deposition according to any one of claims 1 to 10, wherein during the movement of the microwave generator (4) along the axial direction of the liner tube (2) from the pump end area (22) to the gas end area (20), the actual output power of each area is maintained respectively to be the same as that of the corresponding area during the movement of the microwave generator (4) along the axial direction of the liner tube (2) from the gas end area (20) to the pump end area (22).

12. A method for improving the uniformity of PCVD raw material gas deposition, which adopts the system for improving the uniformity of PCVD raw material gas deposition according to any one of claims 1 to 11 to perform the deposition on the PCVD raw material gas, and the method comprises the following steps:
setting a set temperature and a preset output power at each real-time position in the holding furnace (3);
making raw material gas enter the liner tube (2) from a gas end area (20) and move from the gas end area (20) to the pump end area (22) along the axial direction of the liner tube (2);
measuring the set temperature at the real-time position at the liner tube (2) where a microwave generator (4) is located; and
determining the ending position of the gas end area (20) or the starting position of the middle end area (21), and the ending position of the middle end area (21) or the starting position of the pump end area (22) according to the set temperature at the real-time position, and reducing the actual output power of the microwave generator (4) at the starting position of the gas end area (20) and the starting position of the pump end area (22), and keeping the reduced actual output power constant in the gas end area (20) and the pump end area (22).

13. A use of the system for improving the uniformity of PCVD raw material gas deposition according to any one of claims 1 to 11 or of the method for improving the uniformity of PCVD raw material gas deposition according to claim 12 in a preparation of a core rod of an optical fiber preform.

## Patentansprüche

1. System zum Verbessern der Einheitlichkeit einer PCVD-(Plasma Chemical Vapor Deposition)-Rohmaterialgasabscheidung, aufweisend:
eine Auskleidungsröhre (2);
einen Mikrowellengenerator (4), der auf ein Äußeres der Auskleidungsröhre (2) gesetzt ist und darauf ausgelegt ist, sich entlang einer axialen Richtung der Auskleidungsröhre (2) hin und herzubewegen;
einen Halteofen (3), der auf das Äußere des Mikrowellengenerators (4) gesetzt ist und in dem eine Temperaturmesssonde angeordnet ist und der darauf ausgelegt ist, eine eingestellte Temperatur an jeder Echtzeitposition in dem Halteofen (3) während einer axialen Bewegung des Mikrowellengenerators (4) entlang der Auskleidungsröhre (2) zu messen;
wobei der Halteofen (3) nacheinander mit einem Gasendbereich (20), einem Mittelendbereich (21) und einem Pumpenendbereich (22) entlang der axialen Richtung der Auskleidungsröhre (2) versehen ist;
wobei eine voreingestellte Ausgangsleistung des Mikrowellengenerators (4) in jedem Bereich dieselbe ist;
wobei das System ferner eine PLC-Steuereinheit (8) aufweist, die mit dem Halteofen (3) und dem Mikrowellengenerator (4) verbunden ist und dafür konfiguriert ist, dass sie:
während der Bewegung des Mikrowellengenerators (4) entlang der axialen Richtung der Auskleidungsröhre (2) von dem Gasendbereich (20) zu dem Pumpenendbereich (22) gemäß der eingestellten Temperatur an der Echtzeitposition, die durch die Temperaturmesssonde rückgemeldet wird, eine Endposition des Gasendbereichs (20) oder eine Startposition des Mittelendbereichs (21) und die Endposition des Mittelendbereichs (21) oder die Startposition des Pumpenendbereichs (22) bestimmt, eine tatsächliche Ausgangsleistung des Mikrowellengenerators (4) an der Startposition des Gasendbereichs (20) und der Startposition des Pumpenendbereichs (22) verringert und die verringerte tatsächliche Ausgangsleistung in dem Gasendbereich (20) und dem Pumpenendbereich (22) konstant hält.

2. System zum Verbessern der Einheitlichkeit einer PCVD-(Plasma Chemical Vapor Deposition)-Rohmaterialgasabscheidung nach Anspruch 1, wobei die eingestellte Temperatur an der Echtzeitposition während der Bewegung des Mikrowellengenerators (4) entlang der axialen Richtung der Auskleidungsröhre (2) von dem Gasendbereich (20) zu dem Pumpenendbereich (22) einen Trend widerspiegelt, demzufolge zunächst ein Anstieg, dann eine Abnahme, und dann wieder ein Anstieg erfolgt.

3. System zum Verbessern der Einheitlichkeit einer PCVD-(Plasma Chemical Vapor Deposition)-Rohmaterialgasabscheidung nach Anspruch 2, wobei die eingestellte Temperatur an der Echtzeitposition des Gasendbereichs (20) nicht geringer ist als die Temperatur, die der voreingestellten Ausgangsleistung entspricht.
während der Bewegung des Mikrowellengenerators (4) entlang der axialen Richtung der Auskleidungsröhre (2) von dem Gasendbereich (20) zu dem Pumpenendbereich (22): wenn die durch die Temperaturmesssonde rückgemeldete eingestellte Temperatur an der Echtzeitposition graduell abnimmt und auf die Temperatur fällt, die der voreingestellten Ausgangsleistung entspricht, die Echtzeitposition die Endposition des Gasendbereichs (20) oder die Startposition des Mittelendbereichs (21) ist; und wenn die Differenz zwischen der durch die Temperaturmesssonde rückgemeldeten eingestellten Temperatur an der Echtzeitposition und der Temperatur an der vorherigen Echtzeitposition eine reverse Mutation zeigt, die Echtzeitposition die Endposition des Mittelendbereichs (21) oder die Startposition des Pumpenendbereichs (22) ist.

4. System zum Verbessern der Einheitlichkeit einer PCVD-(Plasma Chemical Vapor Deposition)-Rohmaterialgasabscheidung nach Anspruch 3, wobei die eingestellte Temperatur T_{gas} an der Echtzeitposition des Gasendbereichs (20) 1000 °C ≤ T_{gas} ≤ 1080 °C ist; die eingestellte Temperatur T_{middle} an der Echtzeitposition des Mittelendbereichs (21) 950 °C ≤ T_{middle} < 1000 °C ist; und die eingestellte Temperatur Tₚᵤₘₚ an der Echtzeitposition des Pumpenendbereichs (22) 950 °C < Tₚᵤₘₚ ≤ 1030 °C ist.

5. System zum Verbessern der Einheitlichkeit einer PCVD-(Plasma Chemical Vapor Deposition)-Rohmaterialgasabscheidung nach Anspruch 3, wobei die voreingestellte Ausgangsleistung 7,0 kW beträgt; und die der voreingestellten Ausgangsleistung entsprechende Temperatur 994 °C bis 1030 °C beträgt.

6. System zum Verbessern der Einheitlichkeit einer PCVD-(Plasma Chemical Vapor Deposition)-Rohmaterialgasabscheidung nach Anspruch 1, wobei die tatsächliche Ausgangsleistung des Mikrowellengenerators (4) an der Startposition des Gasendbereichs (20) und der Startposition des Pumpenendbereichs (22) auf jeden Wert größer als 5,0 kW und weniger als 7,0 kW verringert ist.

7. System zum Verbessern der Einheitlichkeit einer PCVD-(Plasma Chemical Vapor Deposition)-Rohmaterialgasabscheidung nach Anspruch 6, wobei die tatsächliche Ausgangsleistung des Mikrowellengenerators (4) an der Startposition des Gasendbereichs (20) auf 5,5 kW verringert ist und die tatsächliche Ausgangsleistung des Mikrowellengenerators (4) an der Startposition des Pumpenendbereichs (22) auf 5,5 kW verringert ist.

8. System zum Verbessern der Einheitlichkeit einer PCVD-(Plasma Chemical Vapor Deposition)-Rohmaterialgasabscheidung nach Anspruch 6, wobei die tatsächliche Ausgangsleistung des Mikrowellengenerators (4) an der Startposition des Gasendbereichs (20) auf 6,0 kW verringert ist und die tatsächliche Ausgangsleistung des Mikrowellengenerators (4) an der Startposition des Pumpenendbereichs (22) auf 5,5 kW verringert ist.

9. System zum Verbessern der Einheitlichkeit einer PCVD-(Plasma Chemical Vapor Deposition)-Rohmaterialgasabscheidung nach Anspruch 1, wobei die Längen des Gasendbereichs (20) und des Pumpenendbereichs (22) beide kürzer sind als diejenigen des Mittelendbereichs (21).

10. System zum Verbessern der Einheitlichkeit einer PCVD-(Plasma Chemical Vapor Deposition)-Rohmaterialgasabscheidung nach Anspruch 9, wobei die Längen des Gasendbereichs (20) und des Pumpenendbereichs (22) beide 200 mm bis 400 mm betragen; und die Länge des Mittelendbereichs (21) 600 mm bis 900 mm beträgt.

11. System zum Verbessern der Einheitlichkeit einer PCVD-(Plasma Chemical Vapor Deposition)-Rohmaterialgasabscheidung nach einem der Ansprüche 1 bis 10, wobei während der Bewegung des Mikrowellengenerators (4) entlang der axialen Richtung der Auskleidungsröhre (2) von dem Pumpenendbereich (22) zu dem Gasendbereich (20) die tatsächliche Ausgangsleistung jedes Bereichs jeweils so beibehalten wird, dass sie dieselbe ist wie diejenige des entsprechenden Bereichs während der Bewegung des Mikrowellengenerators (4) entlang der axialen Richtung der Auskleidungsröhre (2) von dem Gasendbereich (20) zu dem Pumpenendbereich (22).

12. Verfahren zum Verbessern der Einheitlichkeit einer PCVD-Rohmaterialgasabscheidung, das das System zum Verbessern der Einheitlichkeit der PCVD-Rohmaterialgasabscheidung nach einem der Ansprüche 1 bis 11 verwendet, um die Abscheidung auf dem PCVD-Rohmaterialgas durchzuführen, und wobei das Verfahren die folgenden Schritte aufweist:
Einstellen einer eingestellten Temperatur und einer voreingestellten Ausgangsleistung an jeder Echtzeitposition in dem Halteofen (3);
Hereinbringen von Rohmaterialgas in die Auskleidungsröhre (2) von einem Gasendbereich (20) und Bewegen von dem Gasendbereich (20) zu dem Pumpenendbereich (22) entlang der axialen Richtung der Auskleidungsröhre (2);
Messen der eingestellten Temperatur an der Echtzeitposition an der Auskleidungsröhre (2), wo sich ein Mikrowellengenerator (4) befindet; und
Bestimmen der Endposition des Gasendbereichs (20) oder der Startposition des Mittelendbereichs (21) und der Endposition des Mittelendbereichs (21) oder der Startposition des Pumpenendbereichs (22) gemäß der eingestellten Temperatur an der Echtzeitposition, und Verringern der tatsächlichen Ausgangsleistung des Mikrowellengenerators (4) an der Startposition des Gasendbereichs (20) und der Startposition des Pumpenendbereichs (22), und Konstanthalten der verringerten tatsächlichen Ausgangsleistung in dem Gasendbereich (20) und dem Pumpenendbereich (22).

13. Verwendung des Systems zum Verbessern der Einheitlichkeit der PCVD-Rohmaterialgasabscheidung nach einem der Ansprüche 1 bis 11 oder des Verfahrens zum Verbessern der Einheitlichkeit der PCVD-Rohmaterialgasabscheidung nach Anspruch 12 bei einer Herstellung einer Kernstange einer Lichtleitfaser-Vorform.

## Revendications

1. Système pour améliorer l'uniformité du dépôt de gaz de matière première par dépôt chimique en phase vapeur au plasma (PCVD), comprenant :
un tube de revêtement (2) ;
un générateur de micro-ondes (4), qui est gainé à l'extérieur du tube de revêtement (2), et qui est configuré pour se déplacer dans le sens axial du tube de revêtement (2) ;
un four de maintien (3), qui est gainé à l'extérieur du générateur de micro-ondes (4), et une sonde de mesure de la température est disposée à l'intérieur et est configurée pour mesurer une température de consigne à chaque position en temps réel dans le four de maintien (3) pendant un mouvement axial du générateur de micro-ondes (4) le long du tube de revêtement (2) ;
dans lequel le four de maintien (3) est successivement pourvu d'une zone d'extrémité de gaz (20), d'une zone d'extrémité centrale (21) et d'une zone d'extrémité de pompe (22) le long de la direction axiale du tube de revêtement (2) ;
la puissance de sortie prédéfinie du générateur de micro-ondes (4) est la même dans chaque zone ;
le système comprend en outre une unité de contrôle PLC (8), qui est connectée au four de maintien (3) et au générateur de micro-ondes (4), et qui est configurée pour :
pendant le déplacement du générateur de micro-ondes (4) le long de la direction axiale du tube de revêtement (2) de la zone d'extrémité de gaz (20) à la zone d'extrémité de pompe (22), en fonction de la température de consigne à la position en temps réel renvoyée par la sonde de mesure de la température, déterminer une position finale de la zone d'extrémité de gaz (20) ou une position initiale de la zone d'extrémité centrale (21), et la position finale de la zone d'extrémité centrale (21) ou la position initiale de la zone d'extrémité de pompe (22), réduire une puissance de sortie réelle du générateur de micro-ondes (4) à la position initiale de la zone de gaz (20) et à la position initiale de la zone d'extrémité de pompe (22), et maintenir la puissance de sortie réelle réduite constante dans la zone d'extrémité de gaz (20) et dans la zone d'extrémité de pompe (22).

2. Le système pour améliorer l'uniformité du dépôt de gaz de matière première PCVD selon la revendication 1, dans lequel la température de consigne à la position en temps réel pendant le mouvement du générateur de micro-ondes (4) le long de la direction axiale du tube de revêtement (2) de la zone d'extrémité de gaz (20) à la zone d'extrémité de pompe (22) présente une tendance d'abord à l'augmentation, puis à la diminution et ensuite à l'augmentation.

3. Le système pour améliorer l'uniformité du dépôt de gaz de matière première PCVD selon la revendication 2, dans lequel la température de consigne à la position en temps réel de la zone d'extrémité de gaz (20) n'est pas inférieure à la température correspondant à la puissance de sortie prédéfinie ;
pendant le déplacement du générateur de micro-ondes (4) le long de la direction axiale du tube de revêtement (2) de la zone d'extrémité de gaz (20) à la zone d'extrémité de pompe (22) : lorsque la température de consigne à la position en temps réel renvoyée par la sonde de mesure de la température diminue progressivement et tombe à la température correspondant à la puissance de sortie prédéfinie, la position en temps réel est la position finale de la zone d'extrémité de gaz (20) ou la position initiale de la zone d'extrémité centrale (21) ; et lorsque la différence entre la température de consigne à la position en temps réel renvoyée par la sonde de mesure de la température et la température à la position en temps réel précédente présente une mutation inverse, la position en temps réel est la position finale de la zone d'extrémité centrale (21) ou la position initiale de la zone d'extrémité de pompe (22).

4. Le système pour améliorer l'uniformité du dépôt de gaz de matière première PCVD selon la revendication 3, dans lequel la température de consigne T_{gas} à la position en temps réel de la zone d'extrémité de gaz (20) est 1000°C≤T_{gas}≤1080°C; la température de consigne T_{middle} à la position en temps réel de la zone d'extrémité centrale (21) est de 950°C≤T_{middle}< 1000°C; et la température de consigne Tₚᵤₘₚ à la position en temps réel de la zone d'extrémité de pompe (22) est de 950°C<Tₚᵤₘₚ≤1030°C.

5. Le système pour améliorer l'uniformité du dépôt de gaz de matière première PCVD selon la revendication 3, dans lequel la puissance de sortie prédéfinie est de 7,0 kW ; et la température correspondant à la puissance de sortie prédéfinie est de 994°C à 1030°C.

6. Le système pour améliorer l'uniformité du dépôt de gaz de matière première PCVD selon la revendication 1, dans lequel la puissance de sortie réelle du générateur de micro-ondes (4) est réduite à toute valeur supérieure à 5,0 kW et inférieure à 7,0 kW à la position initiale de la zone d'extrémité de gaz (20) et à la position initiale de la zone d'extrémité de pompe (22).

7. Le système pour améliorer l'uniformité du dépôt de gaz de matière première PCVD selon la revendication 6, dans lequel la puissance de sortie réelle du générateur de micro-ondes (4) à la position initiale de la zone d'extrémité de gaz (20) est réduite à 5,5 kW, et la puissance de sortie réelle du générateur de micro-ondes (4) à la position initiale de la zone d'extrémité de pompe (22) est réduite à 5,5 kW.

8. Le système pour améliorer l'uniformité du dépôt de gaz de matière première PCVD selon la revendication 6, dans lequel la puissance de sortie réelle du générateur de micro-ondes (4) à la position initiale de la zone d'extrémité de gaz (20) est réduite à 6,0 kW, et la puissance de sortie réelle du générateur de micro-ondes (4) à la position initiale de la zone d'extrémité de pompe (22) est réduite à 5,5 kW.

9. Le système pour améliorer l'uniformité du dépôt de gaz de matière première PCVD selon la revendication 1, dans lequel les longueurs de la zone d'extrémité de gaz (20) et de la zone d'extrémité de pompe (22) sont toutes deux inférieures à celle de la zone d'extrémité centrale (21).

10. Le système pour améliorer l'uniformité du dépôt de gaz de matière première PCVD selon la revendication 9, dans lequel les longueurs de la zone d'extrémité de gaz (20) et de la zone d'extrémité de pompe (22) sont toutes deux de 200 mm à 400 mm ; et la longueur de la zone d'extrémité centrale (21) est de 600 mm à 900 mm.

11. Le système pour améliorer l'uniformité du dépôt de gaz de matière première PCVD selon l'une des revendications 1 à 10, dans lequel pendant le mouvement du générateur de micro-ondes (4) le long de la direction axiale du tube de revêtement (2) de la zone d'extrémité de pompe (22) à la zone d'extrémité de gaz (20), la puissance de sortie réelle de chaque zone est maintenue respectivement pour être la même que celle de la zone correspondante pendant le mouvement du générateur de micro-ondes (4) le long de la direction axiale du tube de revêtement (2) de la zone d'extrémité de gaz (20) à la zone d'extrémité de pompe (22).

12. Méthode pour améliorer l'uniformité du dépôt de gaz de matière première PCVD, qui adopte le système pour améliorer l'uniformité du dépôt de gaz de matière première PCVD selon l'une des revendications 1 à 11 pour effectuer le dépôt sur le gaz de matière première PCVD, et la méthode comprend les étapes suivantes :
régler une température de consigne et une puissance de sortie prédéfinie à chaque position en temps réel dans le four de maintien (3) ;
faire entrer le gaz de matière première dans le tube de revêtement (2) à partir d'une zone d'extrémité de gaz (20) et se déplacer de la zone d'extrémité de gaz (20) à la zone d'extrémité de pompe (22) le long de la direction axiale du tube de revêtement (2) ;
mesurer la température de consigne à la position en temps réel du tube de revêtement (2) où se trouve un générateur de micro-ondes (4) ; et
déterminer la position finale de la zone d'extrémité de gaz (20) ou la position initiale de la zone d'extrémité centrale (21), et la position finale de la zone d'extrémité centrale (21) ou la position initiale de la zone d'extrémité de pompe (22) en fonction de la température de consigne à la position en temps réel, et réduire la puissance de sortie réelle du générateur de micro-ondes (4) à la position initiale de la zone d'extrémité de gaz (20) et à la position initiale de la zone d'extrémité de pompe (22), et maintenir la puissance de sortie réelle réduite constante dans la zone d'extrémité de gaz (20) et dans la zone d'extrémité de pompe (22).

13. Utilisation du système pour améliorer l'uniformité du dépôt de gaz de matière première PCVD selon l'une des revendications 1 à 11 ou de la méthode pour améliorer l'uniformité du dépôt de gaz de matière première PCVD selon la revendication 12 dans la préparation d'une tige centrale d'une préforme de fibre optique.
